# EUROPEAN PATENT SPECIFICATION

(11) **EP 4 092 593 B1**
(45) Date of publication and mention of the grant of the patent: **22.04.2026**
(21) Application number: 20913833.8
(22) Date of filing: 16.01.2020
(51) Int. Cl.: G06Q 10/10, G06Q 30/06, G06T 7/00, G06V 40/16, G06V 20/52, G06Q 10/0631, G06F 3/14, G06Q 10/0639, G06Q 30/0201, G06Q 30/0207, G06Q 30/0251

(54) **DISPLAY CONTROL DEVICE, DISPLAY CONTROL METHOD, AND PROGRAM**
ANZEIGESTEUERUNGSVORRICHTUNG, ANZEIGESTEUERUNGSVERFAHREN UND PROGRAMM
DISPOSITIF DE COMMANDE D'AFFICHAGE, PROCÉDÉ DE COMMANDE D'AFFICHAGE, ET PROGRAMME

(43) Date of publication of application: 23.11.2022
(73) Proprietor: Sharp NEC Display Solutions, Ltd., Tokyo 108-0073 (JP)
(72) Inventor: ASANO, Takahiro, Tokyo 108-0073 (JP)
(74) Representative: Müller Hoffmann & Partner
(86) International application number: PCT/JP2020/001229
(87) International publication number: WO 2021/144908

(56) References cited:
- JP-A- 2018 132 811
- JP-A- 2019 113 978
- JP-A- H06 314 362
- US-A1- 2019 236 531

## Description

### [Technical Field]

The present invention relates to a display control device, a display control method, and a program.

### [Background Art]

Patent Literature 1 discloses a technology for displaying advertisements, coupons, and the like on a display device installed in a store. Patent Literature 2 discloses a technology for managing clock-in and clock-out data of employees. Patent Literature 3 discloses a technology for performing authentication based on a facial image and determining whether an authenticated person is a store clerk or a customer.

US 2019/236531 A1 is also a relevant prior art document.

### [Citation List]

### [Patent Literature]

[Patent Literature 1]
   Japanese Unexamined Patent Application, First Publication No. 2010-20051
[Patent Literature 2]
   Japanese Unexamined Patent Application, First Publication No. 2006-107101
[Patent Literature 3]
   Japanese Unexamined Patent Application, First Publication No. 2009-230565

### [Summary of Invention]

### [Technical Problem]

There is a technology of photographing a periphery of a display device (digital signage), estimating attributes (age, sex, and the like) of a viewer based on the photographed image, and displaying information (advertisements, coupons, and the like) on the display device according to the estimated attributes. According to this technology, information in which the viewer is highly likely to be interested can be displayed on the display device.

Incidentally, when such a display device is installed in a store, customers and store clerks may be positioned near the display device and be photographed. Customers are positioned near the display device to enjoy viewing content, while the store clerks on duty are positioned near the display device for business purposes such as maintenance of the display device. In this manner, the customers and the store clerks are positioned near the display device for different purposes. If unnecessary processing of estimating the attributes (age, sex, and the like) based on the photographed image and inputting information corresponding to the estimated attributes to the display device is performed when the store clerks are positioned near the display device like when the customers are positioned near the display device, the burden on a computer is large. In addition, there is also a problem that appropriate information cannot be displayed for a store clerk positioned near the display device for business purposes.

An objective of the present invention is to provide a technology for displaying appropriate information on a display device installed in a store.

### [Solution to Problem]

The invention is defined by the appended claims.

According to the present invention, provided is a display control device that includes an acquisition means for acquiring an image generated by a camera, a person extraction means for extracting a person from the image, a determination means for determining whether the extracted person is a store clerk on duty based on a facial image or an appearance feature amount of the extracted person and on-duty store clerk information including at least one of facial images and appearance feature amounts of store clerks on duty, and a display control means for changing display control of a display installed in a store according to whether the extracted person is a store clerk on duty.

In addition, according to the present invention, provided is a display control method that includes, by a computer, acquiring an image generated by a camera, extracting a person from the image, determining whether the extracted person is a store clerk on duty based on a facial image or an appearance feature amount of the extracted person and on-duty store clerk information including at least one of facial images and appearance feature amounts of store clerks on duty, and changing display control of a display installed in a store according to whether the extracted person is a store clerk on duty.

In addition, according to the present invention, provided is a program that causes a computer to function as an acquisition means for acquiring an image generated by a camera, a person extraction means for extracting a person from the image, a determination means for determining whether the extracted person is a store clerk on duty based on a facial image or an appearance feature amount of the extracted person and on-duty store clerk information including at least one of facial images and appearance feature amounts of store clerks on duty, and a display control means for changing display control of a display installed in a store according to whether the extracted person is a store clerk on duty.

In addition, according to the present invention, provided is a management device that includes a clock-in and clock-out detection means for detecting clock-in and clock-out of a store clerk, a generation means for generating on-duty store clerk information including at least one of facial images and appearance feature amounts of store clerks on duty based on a result of the detection by the clock-in and clock-out detection means, and a transmission means for transmitting the on-duty store clerk information to a display control device that changes display control of a display installed in a store according to whether a person extracted from an image is a store clerk on duty.

In addition, according to the present invention, provided is a management method that includes, by a computer, detecting clock-in and clock-out of a store clerk, generating on-duty store clerk information including at least one of facial images and appearance feature amounts of store clerks on duty based on a result of the detection, and transmitting the on-duty store clerk information to a display control device that changes display control of a display installed in a store according to whether a person extracted from an image is a store clerk on duty.

In addition, according to the present invention, provided is a program that causes a computer to function as a clock-in and clock-out detection means for detecting clock-in and clock-out of a store clerk, a generation means for generating on-duty store clerk information including at least one of facial images and appearance feature amounts of store clerks on duty based on a result of the detection by the clock-in and clock-out detection means, and a transmission means for transmitting the on-duty store clerk information to a display control device that changes display control of a display installed in a store according to whether a person extracted from an image is a store clerk on duty.

In addition, according to the present invention, a display control system that includes the display control device and the management device will be provided.

### [Advantageous Effects of Invention]

According to the present invention, a technology for displaying appropriate information on a display device installed in a store is realized.

### [Brief Description of Drawings]

The objective described above, other objectives, features, and advantages are further clarified in preferred embodiments to be described below and the accompanying drawings below.

Fig. 1 is a diagram for describing an overall image and an outline of a display control system of the present embodiment.
Fig. 2 is a diagram which shows an example of a hardware configuration of a display control device and a management device of the present embodiment.
Fig. 3 is an example of a functional block diagram of the management device of the present embodiment.
Fig. 4 is a diagram which schematically shows an example of information processed by the display control system of the present embodiment.
Fig. 5 is a flowchart which shows an example of a flow of processing of the management device of the present embodiment.
Fig. 6 is an example of a functional block diagram of the display control device of the present embodiment.
Fig. 7 is a flowchart which shows an example of a flow of processing of the display control device of the present embodiment.
Fig. 8 is a diagram which schematically shows an example of the information processed by the display control system of the present embodiment.
Fig. 9 is a diagram which schematically shows an example of the information processed by the display control system of the present embodiment.
Fig. 10 is a diagram which schematically shows an example of the information processed by the display control system of the present embodiment.

### [Description of Embodiments]

### <First embodiment>

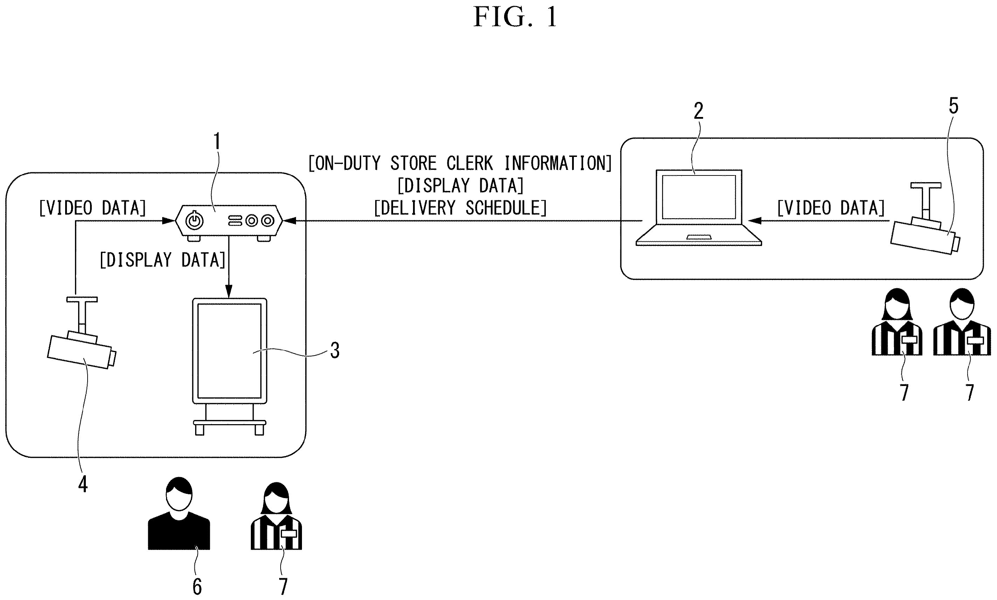

First, an overall image and an outline of a display control system of the present embodiment will be described with reference to Fig. 1. The display control system has a display control device 1 and a management device 2. The display control system may further include at least one of a display 3, a camera 4, and a camera 5.

The camera 5 is a camera for photographing a store clerk 7 who has clocked in at work and a store clerk 7 who has clocked out at work. Video data generated by the camera 5 is transmitted to the management device 2 by wired and/or wireless communication.

The management device 2 detects clock-in and clock-out of a store clerk 7 based on the video data received from the camera 5. Then, the management device 2 generates a list of store clerks 7 on duty (on-duty store clerk information) based on a result of the detection. The on-duty store clerk information includes at least one of facial images and appearance feature amounts of store clerks 7 on duty. The management device 2 transmits the on-duty store clerk information, display data to be displayed on the display 3, a delivery schedule, and the like to the display control device 1 by wired and/or wireless communication. Whenever the on-duty store clerk information is updated, the management device 2 may transmit the updated on-duty store clerk information to the display control device 1.

The display data includes display data for customers to be displayed to a customer 6. The display data for customers may include display data for different targets (for adult females, adult males, children, and the like). **In** addition, the display data may include display data for store clerks to be displayed to a store clerk 7. Moreover, the display data may include display data for when a store clerk 7 and a customer 6 are not detected.

The display 3 is installed in a store. The camera 4 is installed near the display 3 or in the display 3 to photograph the periphery of the display 3. For example, the camera 4 is installed at a position and in a direction for photographing a position at which a person who is viewing the display 3 is considered to be present. Video data generated by the camera 4 is transmitted to the display control device 1 by wired and/or wireless communication.

The display control device 1 analyzes the video data received from the camera 4. First, the display control device 1 extracts a person from the video data. When a person is extracted, the display control device 1 determines whether the extracted person is a store clerk on duty based on a facial image or an appearance feature amount of the extracted person and the on-duty store clerk information. Then, the display control device 1 changes display control of the display 3 according to whether the extracted person is a store clerk on duty.

For example, if the extracted person is not a store clerk on duty, the display control device 1 inputs the display data for customers to the display 3 and displays information for customers. For example, the display control device 1 may estimate attributes (age, sex, and the like) of the extracted person from an image, and input display data corresponding to the estimated attributes to the display 3.

On the other hand, when the extracted person is a store clerk 7 on duty, the display control device 1 does not perform the processing described above (the processing of inputting the display data for customers to the display 3 and displaying the information for customers). In this case, for example, the display control device 1 may input the display data for store clerks to the display 3 and display information for store clerks.

As described above, a processing system of the present embodiment can recognize whether a person positioned near the display 3 is a store clerk 7 or a customer 6, and change the display control of the display 3 according to a result of the recognition.

Next, configurations of the display control device 1 and the management device 2 will be described in detail. First, an example of a hardware configuration of the display control device 1 and the management device 2 will be described.

Each functional unit of the display control device 1 and the management device 2 can be realized by any combination of hardware and software centering on a central processing unit (CPU) of any computer, a memory, a program loaded in a memory, a storage unit such as a hard disk that stores the program (in addition to a program stored in advance from a stage of shipping a device, a program downloaded from a storage medium such as a compact disc (CD), a server on the Internet, or the like can be also stored), and an interface for network connection. It will be understood by those skilled in the art that there are various modification examples for the method of realizing each functional unit and the devices.

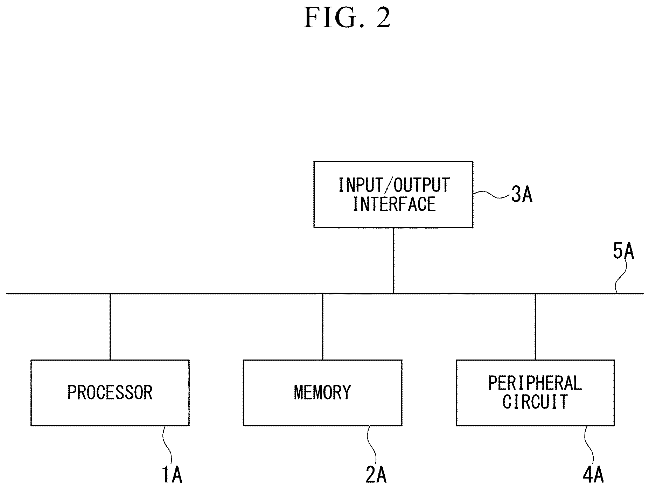

Fig. 2 is a block diagram which exemplifies the hardware configurations of the display control device 1 and the management device 2. As shown in Fig. 2, each of the display control device 1 and the management device 2 has a processor 1A, a memory 2A, an input/output interface 3A, a peripheral circuit 4A, and a bus 5A. The peripheral circuit 4A includes various modules. At least one of the display control device 1 and the management device 2 does not have to have the peripheral circuit 4A. Each of the display control device 1 and the management device 2 may be configured from a plurality of devices physically and/or logically separated from each other, or may be configured from one physically and/or logically integrated device. When at least one of the display control device 1 and the management device 2 is configured from a plurality of devices physically and/or logically separated from each other, each of the plurality of devices can be provided with the hardware configuration described above.

The bus 5A is a data transmission path for the processor 1A, the memory 2A, the peripheral circuit 4A, and the input/output interface 3A transmitting or receiving data to or from each other. The processor 1A is, for example, an arithmetic processing unit such as a CPU or a graphics processing unit (GPU). The memory 2A is, for example, a memory such as a random access memory (RAM) or a read only memory (ROM). The input/output interface 3A includes an interface for acquiring information from an input device, an external device, an external server, an external sensor, a camera, and the like, and an interface for outputting information to an output device, an external device, an external server, and the like. The input device is, for example, a keyboard, a mouse, a microphone, a physical button, a touch panel, or the like. The output device is, for example, a display, a speaker, a printer, a mailer, or the like. The processor 1A can issue a command to each module and perform an arithmetic operation based on a result of the arithmetic operation thereof.

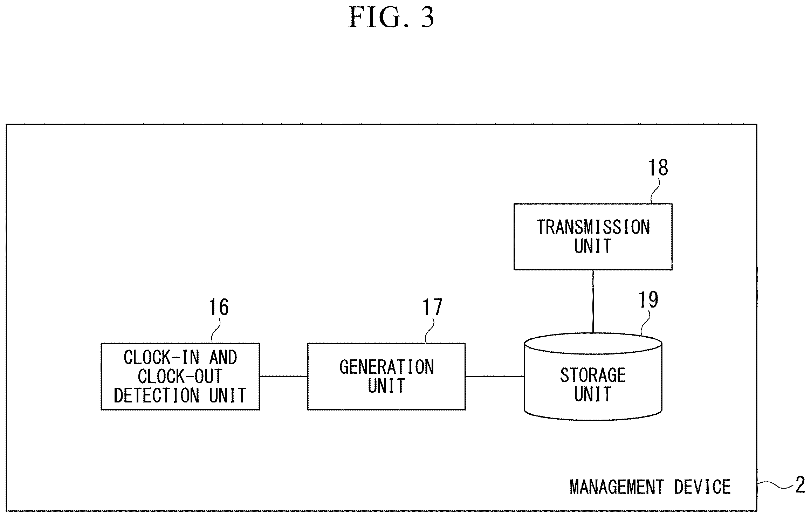

Next, a functional configuration of the management device 2 will be described. Fig. 3 shows an example of a functional block diagram of the management device 2. As shown in Fig. 3, the management device 2 has a clock-in and clock-out detection unit 16, a generation unit 17, a transmission unit 18, and a storage unit 19. The management device 2 is preferably installed in a storage where the display 3 is installed. In particular, it is preferable that the storage unit 19 be positioned in a local area network (a communication network) provided in the storage and placed in an environment that cannot be accessed from the outside of the local area network. For example, the storage unit 19 may be placed in a local area network, and a device (a firewall, or the like) that manages access from an external network may be installed between the local area network and the external network.

The clock-in and clock-out detection unit 16 detects the clock-in and clock-out of a store clerk 7. In the present embodiment, the clock-in and clock-out detection unit 16 detects the clock-in and clock-out of the store clerk 7 based on an image generated by the camera 5. The camera 5 is a camera for photographing the store clerk 7 who has clocked in at work and the store clerk 7 who has clocked out at work. For example, the camera 5 may be installed near an entrance or exit of a staff room, a time recorder for managing the clock-in and clock-out, or the like, or may be installed in another place. The store clerk 7 may operate the camera 5 when clocking in and clocking out at work to take a picture of himself or herself. That is, the camera 5 may photograph a facial image (a still image) of the store clerk 7 in response to a photographing instruction input of the store clerk 7 positioned in front of the camera 5. The photographing instruction input is realized via any input device such as a touch panel, a physical button, a microphone, a mouse, or a keyboard. In addition, for example, like a surveillance camera, the camera 5 may constantly photograph a moving image. The surveillance camera may be, for example, installed in a place through which the store clerk 7 passes when clocking in and out, such as the entrance or exit of the staff room.

Here, an example of a method in which the clock-in and clock-out detection unit 16 determines whether a store clerk 7 included in the image is clocking in at work or clocking out at work will be described. As described above, in the present embodiment, on-duty store clerk information (a list of store clerks 7 on duty) including at least one of facial images and appearance feature amounts of the store clerks 7 on duty is created and managed. Therefore, the clock-in and clock-out detection unit 16 determines that a store clerk 7 included in the image is "clocking in at work" when the facial image or appearance feature amount of the store clerk 7 is not registered in the on-duty store clerk information, and determines that the store clerk 7 is "clocking out at work" when the facial image or appearance feature amount is registered therein.

In addition, the store clerk 7 may input to the camera 5 or any input device whether he or she is clocking in at work or clocking out at work at the time of photographing using the camera 5. Then, the clock-in and clock-out detection unit 16 may determine whether the store clerk 7 included in the image is clocking in at work or clocking out at work based on the input content.

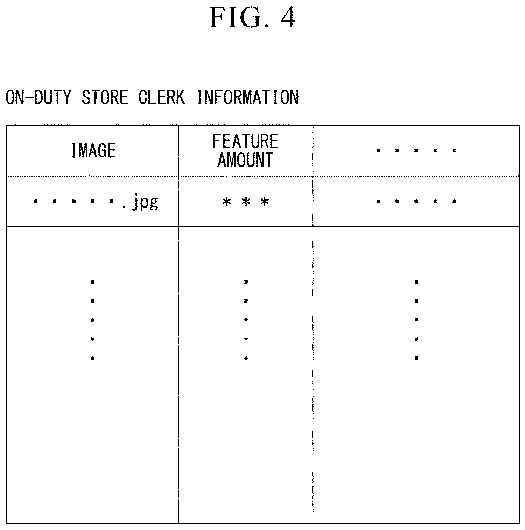

The generation unit 17 generates on-duty store clerk information including at least one of the facial images and the appearance feature amounts of the store clerks 7 on duty based on a result of the detection by the clock-in and clock-out detection unit 16, and stores it in the storage unit 19. Fig. 4 schematically shows an example of the on-duty store clerk information. The shown on-duty store clerk information includes the facial images and the appearance feature amounts of the store clerks 7 on duty.

When the clock-in and clock-out detection unit 16 detects a clock-in of a store clerk 7, the generation unit 17 registers at least one of the facial image of the store clerk 7 included in an image generated by the camera and the appearance feature amount extracted from the facial image in the on-duty store clerk information. Then, when the clock-in and clock-out detection unit 16 detects a clock-out of a store clerk 7, the generation unit 17 deletes information (at least one of the facial image and the appearance feature amount) of the store clerk 7 registered in the on-duty store clerk information.

The transmission unit 18 transmits the on-duty store clerk information to the display control device 1. Whenever the on-duty store clerk information is updated, the transmission unit 18 may transmit the updated on-duty store clerk information to the display control device 1.

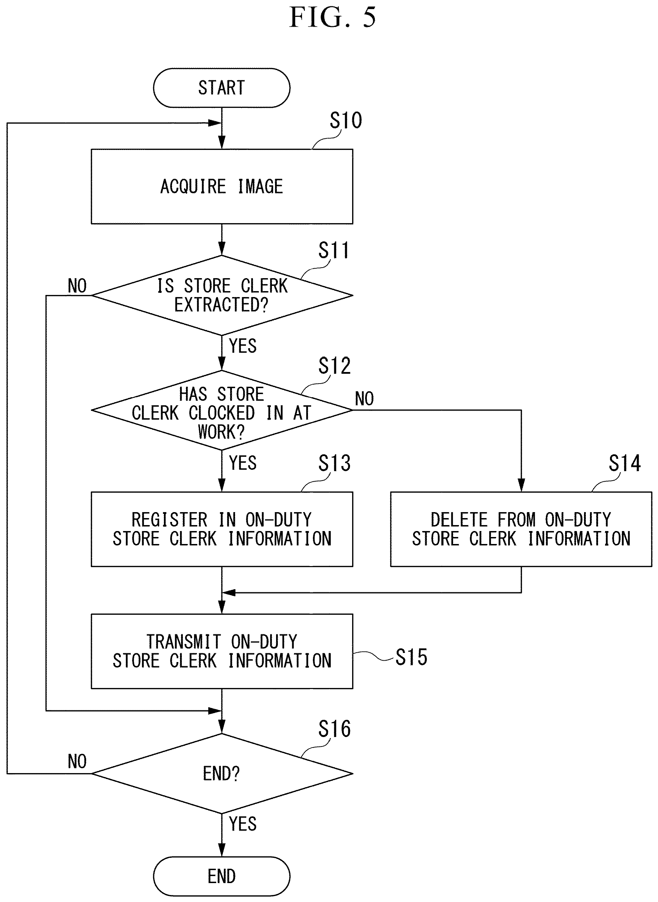

Next, an example of a flow of processing of the management device 2 will be described using a flowchart of Fig. 5.

When the clock-in and clock-out detection unit 16 acquires an image generated by the camera 5 (S10), it performs processing of extracting a person (a store clerk) from the image (S11). Then, when the person (a store clerk 7) is extracted (Yes in S11), the clock-in and clock-out detection unit 16 determines whether the store clerk 7 included in the image is clocking in at work or clocking out at work (S12).

When it is determined that the store clerk 7 is clocking in at work (Yes in S12), the generation unit 17 registers at least one of the facial image of the store clerk 7 included in the image and the appearance feature amount extracted from the facial image in the on-duty store clerk information (refer to Fig. 4) (S13).

On the other hand, when it is determined that the store clerk 7 is clocking out at work (No in S12), the generation unit 17 deletes the information (at least one of the facial image and the appearance feature amount) of the store clerk 7 registered in the on-duty store clerk information (refer to Fig. 4) (S14).

After that, the transmission unit 18 transmits updated on-duty store clerk information to the display control device 1 (S15). Then, if there is no input to end the processing (No in S16), the management device 2 returns to S10 and repeats the same processing.

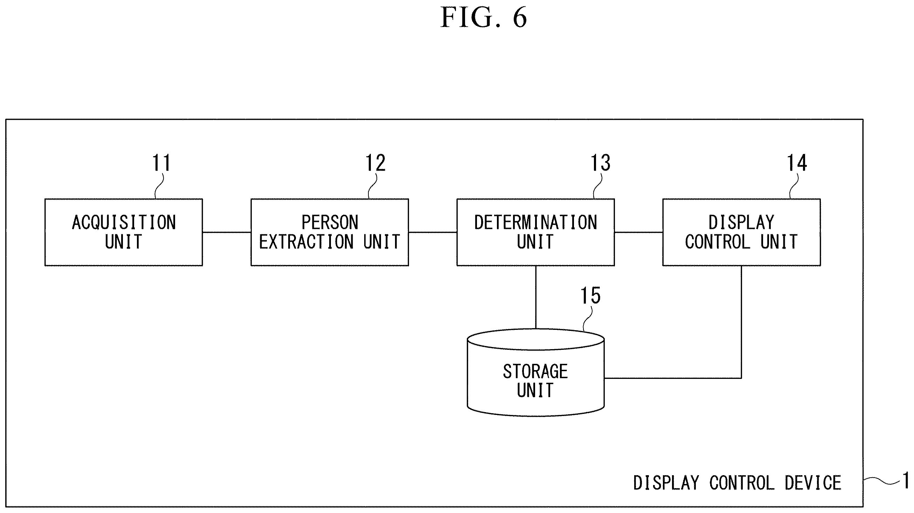

Next, a functional configuration of the display control device 1 will be described. Fig. 6 shows an example of a functional block diagram of the display control device 1. As shown in Fig. 6, the display control device 1 has an acquisition unit 11, a person extraction unit 12, a determination unit 13, a display control unit 14, and a storage unit 15. It is preferable that the display control device 1 be installed in a store in which the display 3 is installed. In particular, it is preferable that the storage unit 15 be positioned in a local area network (a communication network) provided in the store and be placed in an environment that cannot be accessed from the outside of the local area network. For example, the storage unit 15 may be placed in a local area network, and a device (a firewall, or the like) that manages an access from an external network may be installed between the local area network and the external network.

The storage unit 15 stores various types of information transmitted from the management device 2 to the display control device 1. For example, the storage unit 15 stores on-duty store clerk information (refer to Fig. 4), display data to be displayed on the display 3, a delivery schedule, and the like.

The acquisition unit 11 acquires an image generated by the camera 4 (hereinafter, may be referred to as a "display peripheral image"). The camera 4 is installed near the display 3 or in the display 3, and photographs the periphery of the display 3. For example, the camera 4 is installed at a position and in a direction for photographing a position at which a person who is viewing the display 3 is considered to be present. Although Fig. 1 shows an example in which the display 3 and the camera 4 are physically separated, these may be physically integrated. For example, the camera 4 may be embedded in the display 3, and lens of the camera 4 may be provided at any position of the display 3. In addition, the camera 4 may be attached to any position of the display 3 (the display 3 to which the camera 4 is attached).

The camera 4 may constantly photograph a moving image. In addition, the camera 4 may photograph a still image or a moving image for a predetermined time when it is detected that a person is present near the display 3 by, for example, any sensor such as a human sensor.

The person extraction unit 12 extracts a person from the display peripheral image. The person extraction unit 12 can perform the extraction using any conventional image analysis technology.

The determination unit 13 determines whether the extracted person is a store clerk on duty by collating the facial image or appearance feature amount in a display peripheral image of the extracted person with the facial images or appearance feature amounts of the store clerks 7 on duty registered in the on-duty store clerk information. Specifically, when data matching (matching or having similarity to a predetermined level or more) with the facial image or appearance feature amount in the display peripheral image of the extracted person is registered in the on-duty store clerk information, the determination unit 13 determines that the extracted person is a store clerk on duty. Then, when data matching the facial image or appearance feature amount in the display peripheral image of the extracted person is not registered in the on-duty store clerk information, it is determined that the extracted person is not a store clerk on duty.

The display control unit 14 changes the display control of the display 3 installed in a store according to whether the extracted person is a store clerk on duty. An example of the display control will be described below.

### "Display control example 1"

For example, the display control unit 14 may input the first information to the display 3 and display it when the extracted person is a store clerk 7 on duty. Then, when the extracted person is not a store clerk 7 on duty, the display control unit 14 may input the second information different from the first information to the display 3 and display it.

The first information is information provided for a store clerk 7. The first information may be business advice. For example, business advices such as "Let's use a free time to put out a product to a front side, check a trash can, perform cleaning, or the like" may be displayed on the display 3.

Also, business advice displayed on the display 3 may change according to a current time and the like. For example, business advice such as "have you finished advancing a product?" may be displayed on the display 3 between 13:00 and 14:00, and business advice such as "have you checked if a trash can is full?" may be displayed on the display 3 between 14:00 and 15:00. For example, the display control unit 14 can realize an output of business advice for each time zone as described above based on information that defines business advice to be output for each time zone, stored in the storage unit 15 in advance.

In addition, a menu screen for a store clerk may be displayed on the display 3 as the first information. The menu screen may include various menus such as a "business advice," "display settings," and a "display operation method." When a "business advice" is selected, the business advice described above may be displayed on the display 3. When "display setting" is selected, a screen for adjusting settings (a brightness, a sound volume, and the like) of the display 3 may be displayed on the display 3. When a "display operation method" is selected, a guidance on an operation method of the display 3 may be displayed on the display 3.

The first information described above is only an example, and is not limited thereto.

The second information is information provided to a customer 6. The second information is an advertisement for products or stores, campaign information for stores, and the like, but is not limited thereto.

For example, the second information (display data) may be prepared for each target and stored in the storage unit 15. A target can be defined based on attributes of a customer 6, and, for example, "adult female," "adult male," "child," or the like is exemplified. When the display control unit 14 determines that the extracted person is not the store clerk 7, that is, when it is determined that the extracted person is a customer 6, it identifies to which target the customer 6 belongs based on the attributes (age, sex, and the like) of the customer 6 estimated based on the display peripheral image. Then, the display control unit 14 inputs the second information corresponding to the identified target to the display 3.

A plurality of pieces of second information and a delivery schedule (which defines the second information to be displayed on the display 3 in each time zone) may be prepared for each target and stored in the storage unit 15. In this case, the display control unit 14 determines the second information to be input to the display 3 based on a delivery schedule corresponding to a target to which a customer 6 extracted from the display peripheral image belongs and a current date and time.

Further, the display control unit 14 may input third information different from the first and second information to the display 3 and display it when a person is not extracted from the display peripheral image, that is, when there is no person near the display 3. As third information, for example, weather forecast, news, and the like are exemplified, but the present invention is not limited thereto.

### "Display control example 2"

When the extracted person is not a store clerk 7 on duty, the display control unit 14 may input the second information to the display 3 and display it in the same manner as in the display control example 1 described above. Then, the display control unit 14 may set the display 3 to be in a sleep state or a dormant state when the extracted person is a store clerk 7 on duty. Moreover, the display control unit 14 may set the display 3 to be in the sleep state or the dormant state in the same manner when a person is not extracted from the display peripheral image, that is, when there is no person near the display 3.

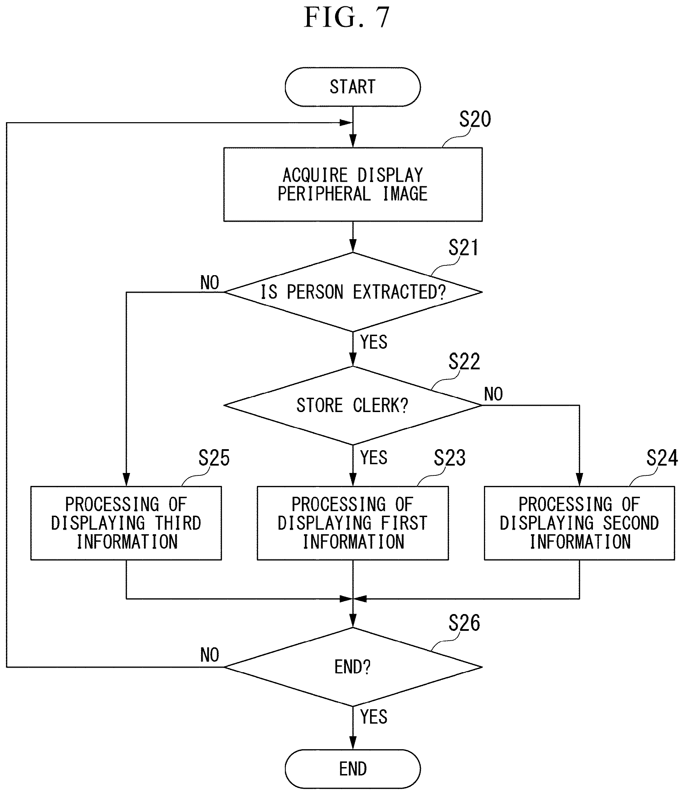

Next, an example of a flow of processing of the display control device 1 will be described using a flowchart of Fig. 7.

When the acquisition unit 11 acquires a display peripheral image generated by the camera 4 (S20), the person extraction unit 12 performs processing of extracting a person from the display peripheral image.

When a person is extracted (Yes in S21), the determination unit 13 determines whether the facial image or the appearance feature amount of the extracted person is registered in the on-duty store clerk information (refer to Fig. 4), thereby determining whether the extracted person is a store clerk 7 on duty.

When the facial image or the appearance feature amount is registered in the on-duty store clerk information, that is, when it is determined that the person extracted by the person extraction unit 12 is a store clerk 7 on duty (Yes in S22), the display control unit 14 inputs the first information to the display 3 (S23). On the other hand, when the facial image or the appearance feature amount is not registered in the on-duty store clerk information, that is, when it is determined that the person extracted by the person extraction unit 12 is not a store clerk 7 on duty (No in S22), the display control unit 14 inputs the second information to the display 3 (S24).

In addition, when a person is not extracted from the display peripheral image in S21 (No in S21), the display control unit 14 inputs the third information to the display 3 (S25). Since details of the first to third information and details of processing of inputting these to the display 3 have been described above, description thereof will be omitted herein.

Next, an effect of the display control system of the present embodiment will be described. When a person is detected near the display 3, the display control system of the present embodiment can determine whether the person is a store clerk 7 on duty, and change the display control of the display 3 according to a result of the determination.

For example, when the person detected near the display 3 is not a store clerk 7 on duty, an advertisement and the like are displayed on the display 3, and thereby sales promotion and the like are expected. In addition, when the person detected near the display 3 is a store clerk 7 on duty, for example, information on a business is displayed on the display 3, and thereby an improvement in business efficiency or business quality is expected. In addition, when the person detected near the display 3 is a store clerk 7 on duty, for example, by setting the display 3 to be in the sleep state or the dormant state, unnecessary information display can be avoided, and power saving effect and a reduction in processing load of the display control system can be realized.

Further, in a case of the present embodiment, at least one of the facial image and the appearance feature amount of a store clerk 7 is registered in the system as on-duty store clerk information according to the clock-in, and the registered facial image or appearance feature amount of the store clerk 7 is deleted from the system according to the clock-out. That is, the registration of the facial image or appearance feature amount of a store clerk 7 on duty to the system is limited to only during work. For this reason, a risk of leaking the facial images and the appearance feature amounts of store clerks 7 to a communication network can be reduced as compared with a case in which the facial images and appearance feature amounts are unnecessarily stored in the system for a long time.

**In** addition, in the case of the present embodiment, the display control device 1 and the management device 2 do not need to be installed in a center such as a cloud, and can be installed in a store (a local area) in which the display 3 is installed. Then, these storage units (the storage unit 15, the storage unit 19) can be positioned in a local area network provided in a store and placed in an environment that cannot be accessed from the outside. For this reason, the risk of leaking the facial images and the appearance feature amounts of store clerks 7 to a communication network can be further reduced.

Moreover, in the case of the present embodiment, it is possible to automatically detect the clock-in and clock-out of a store clerk 7 and automatically generate on-duty store clerk information according to a result of the detection. For this reason, the generation of the information and maintenance of a database for storing the information are not required, and a burden on an operator is reduced.

### <Second embodiment>

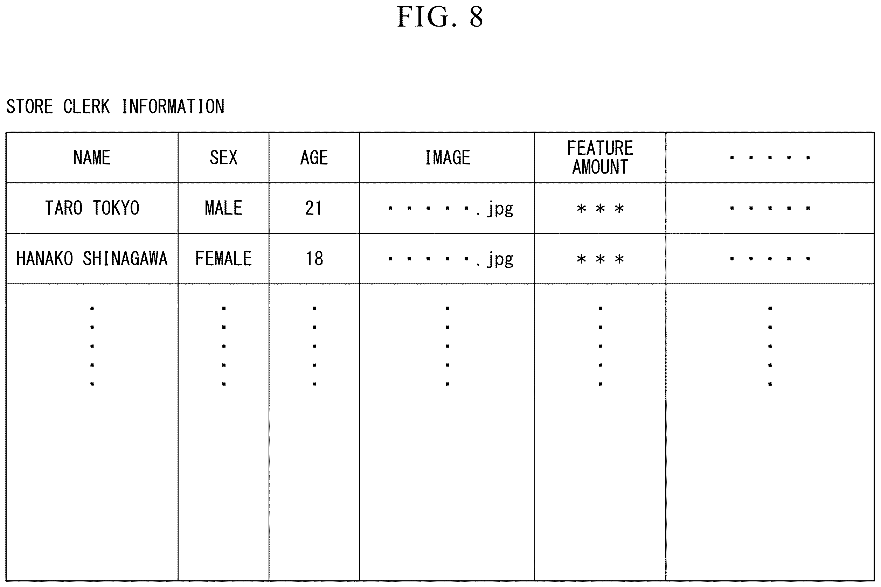

The storage unit 19 of the management device 2 of the present embodiment stores the store clerk information as shown in Fig. 8. The store clerk information is information on store clerks 7 belonging to a store. **In** the case of the example shown in Fig. 8, the store clerk information includes a name, a sex, an age, a facial image, an appearance feature amount (a feature amount extracted from a facial image), and the like. The store clerk information may not include a part of exemplified information, or may include other types of information such as contact information (telephone number, address).

The clock-in and clock-out detection unit 16 identifies a store clerk 7 included in an image generated by the camera 5 by store clerk authentication based on the facial image or the feature amount of the store clerk 7 included in the image generated by the camera 5 and at least one of the facial images and the appearance feature amounts of each store clerk 7 included in the store clerk information. Then, the clock-in and clock-out detection unit 16 identifies whether the store clerk 7 identified to be included in the image is clocking in at work or clocking out at work using the same means as in the first embodiment.

The generation unit 17 registers at least one of the facial image and the appearance feature amount of a store clerk 7 who has clocked in at work, included in the image generated by camera 5, or at least one of the facial image and the appearance feature amount of the store clerk 7 who has clocked in at work, included in the store clerk information, in the on-duty store clerk information. When the generation unit 17 fails in store clerk authentication based on the image generated by the camera 5 and cannot identify the store clerks 7 included in the image generated by the camera 5, registration processing in the on-duty store clerk information is not performed. For example, when a person different from the store clerks 7 is included in the image generated by the camera 5, store clerk authentication fails. Then, the facial image and the appearance feature amount of such a person are not registered in the on-duty store clerk information.

As a modified example of the present embodiment, the clock-in and clock-out detection unit 16 may detect the clock-in and clock-out of a store clerk 7 without using the image generated by the camera 5. Then, the generation unit 17 may register at least one of the facial image and the appearance feature amount of a store clerk 7 who has clocked in at work, included in the store clerk information, in the on-duty store clerk information.

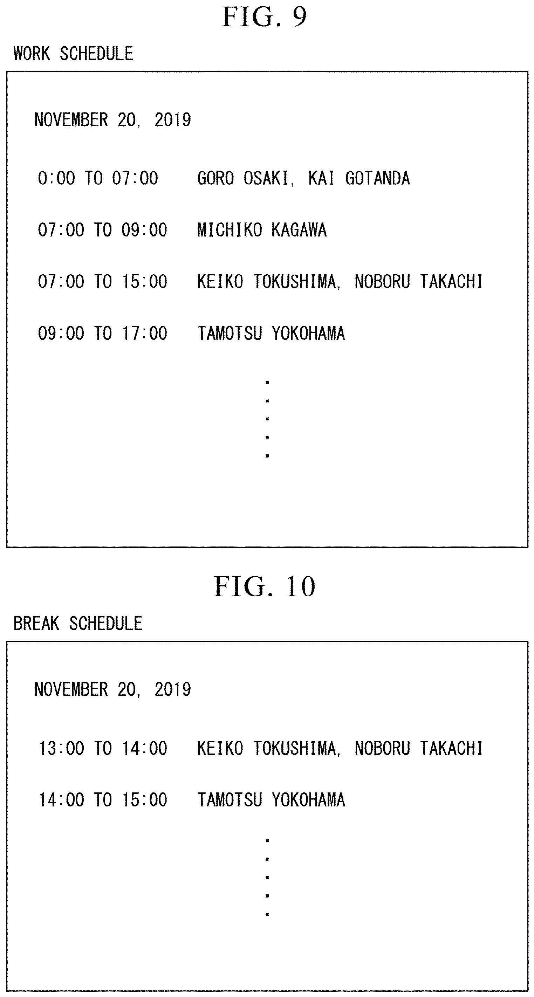

As an example of processing of detecting the clock-in and clock-out of a store clerk 7 without using the image generated by the camera 5, for example, the management device 2 may be communicatively connected to a time recorder that records a clock-in time and a clocking-out time of a store clerk 7, and acquire registered contents of the time recorder. Then, the clock-in and clock-out detection unit 16 may detect the clock-in and clock-out of each store clerk 7 based on the registered contents of the time recorder. In addition, a work schedule indicating a working date and time of each store clerk 7 as shown in Fig. 9 may be generated in advance and may be stored in the storage unit 19. According to the shown work schedule, it is known that Ms. Michiko Kagawa will be working from 7:00 to 9:00 on November 20, 2019. Then, the clock-in and clock-out detection unit 16 may detect the clock-in and clock-out of each store clerk 7 based on the work schedule.

Other configurations of the display control system of the present embodiment are the same as in the first embodiment. According to the display control system of the present embodiment, the same effect as in the first embodiment are realized. In addition, since the display control system of the present embodiment performs store clerk authentication using the store clerk information, it is possible to suppress an inconvenience that the facial image and the appearance feature amount of a person different from the store clerks 7 are registered in the on-duty store clerk information.

In addition, if the facial images and the appearance feature amounts of store clerks 7 are registered as the store clerk information in advance, these may be registered in the on-duty store clerk information, and thus it is not necessary to photograph the store clerks 7 when clocking in at work for a purpose of generating information to be registered in the on-duty store clerk information. Moreover, as described above, if a constituent for detecting the clock-in and clock-out of the store clerks 7 without using the image generated by the camera 5 is adopted, it is not necessary to photograph the store clerks 7 when clocking in or clocking out at work for a purpose of detecting the clock-in and clock-out of the store clerks 7. As a result, the camera 5 is unnecessary, and a cost burden and a labor burden required for maintenance are reduced.

### <Third embodiment>

The storage unit 19 of the present embodiment stores a break schedule indicating a break timing on a working day of each store clerk 7. Fig. 10 schematically shows an example of the break schedule. According to the shown break schedule, it can be known that Keiko Tokushima and Noboru Kochi will take a break from 13:00 to 14:00 during work on November 20, 2019.

Then, based on the break schedule, the generation unit 17 generates on-duty store clerk information including at least one of the facial image and the appearance feature amount of a store clerk 7 who is on duty and not on the break. Specifically, the generation unit 17 generates on-duty store clerk information in the method described in the first or second embodiment, and monitors arrivals of a break start timing and a break end timing of each store clerk 7 based on a break schedule. Then, when the break start timing of a store clerk 7 on duty is reached, at least one of the facial image and appearance feature amount of the store clerk 7 is deleted from the on-duty store clerk information. Then, when the break end timing of the store clerk 7 is reached, at least one of the facial image and the appearance feature amount of the store clerk 7 is registered in the on-duty store clerk information.

Other configurations of the display control system are the same as in the first or second embodiment.

According to the display control system of the present embodiment, the same effects as those in the first or second embodiment are realized. In addition, since a store clerk 7 on the break can purchase products of the store, it is preferable to treat the store clerk 7 in the same manner as the customer 6. According to the display control system of the present embodiment, it is possible to prevent information on the store clerk 7 who is on the break and is away from the business from being included in the on-duty store clerk information. As a result, the display control system can treat the store clerk 7 on the break in the same manner as the customer 6, and can provide the store clerk 7 on the break with the same information as the customer 6. As a result, it is possible to provide useful information (advertisements, and the like) to the store clerk 7 on the break, and thus sales improvement and the like can be expected.

Although the present invention has been described with reference to the embodiments (and examples), the present invention is not limited to the embodiments (and examples) described above. Various changes that can be understood by those skilled in the art can be made within a scope of the present invention in the configuration and details of the present invention, provided that such changes fall within the scope of the appended claims.

In the present specification, "acquisition" means that "getting data stored in another device or a storage medium by a host device (active acquisition)" based on a user input or an instruction of a program," and may include, for example, receiving data by requesting or inquiring to another device, reading data by accessing another device or the store medium, and the like. In addition, "acquisition" means "inputting data output from another device to the host device (passive acquisition)" based on a user input or an instruction of the program, and may include, for example, receiving delivered (or transmitted, push notified, or the like) data, and the like. In addition, "acquisition" may include acquiring data by selecting it from received data or information, and "generating new data by performing editing (text conversion, data sorting, extraction of some data, file format change, or the like), or the like on data and acquiring the new data."

## Claims

1. A display control device comprising:
an acquisition means for acquiring an image generated by a camera;
a person extraction means for extracting a person from the image;
a determination means for determining whether the extracted person is a store clerk on duty based on a facial image or an appearance feature amount of the extracted person and on-duty store clerk information including at least one of facial images and appearance feature amounts of store clerks on duty; and
a display control means for not inputting a plurality of different sets of display data for different targets of customers into a display device when the determination means determined that the extracted person is a store clerk on duty; and the display control means being for estimating an attribute of the extracted person and for inputting a corresponding set of display data, which corresponds to the estimated attribute of the extracted person, into the display device when the determination means determined that the extracted person is not any store clerk on duty.

2. The display control device according to claim 1, wherein the camera is installed near the display or in the display.

3. The display control device according to claim 1 or 2,
wherein the display control means inputs first information to the display when the determination means determined that the extracted person is a store clerk on duty, wherein the first information is not associated with the different targets of customers and wherein the first information is different from the plurality of different sets of display data for different targets of customers.

4. The display control system according to claim 3, wherein the first information is business advice.

5. The display control system according to claim 4, wherein the display control means determines the business advice to be displayed on the display based on information that defines the business advice for each time zone and a current time.

6. The display control system according to any one of claims 3 to 5, wherein the second information is an advertisement or campaign information.

7. The display control system according to claim 6, wherein the display control means estimates attributes of the person based on the image and determines the advertisement or the campaign information to be display on a display based on the estimated attributes.

8. The display control device according to any one of claims 1 to 7, further comprising:
a storage means for storing the on-duty store clerk information, which is installed in a store in which the display is installed,
wherein the determination means performs the determination based on the on-duty store clerk information stored in the storage means.

9. The display control device according to any one of claims 1 to 8, wherein the on-duty store clerk information includes at least one of facial images and appearance feature amounts of store clerks on duty and not on a break.

10. A display control method performed by a computer, the method comprising:
acquiring an image generated by a camera;
extracting a person from the image;
determining whether the extracted person is a store clerk on duty based on a facial image or an appearance feature amount of the extracted person and on-duty store clerk information including at least one of facial images and appearance feature amounts of store clerks on duty; and
prohibiting to input a plurality of different sets of display data for different targets of customers into a display device when it is determined that the extracted person is a store clerk on duty; and
estimating an attribute of the extracted person and for inputting a corresponding set of display data, which corresponds to the estimated attribute of the extracted person, into the display device when it is determined that the extracted person is not any store clerk on duty.

11. A program that causes a computer to function as
an acquisition means for acquiring an image generated by a camera,
a person extraction means for extracting a person from the image,
a determination means for determining whether the extracted person is a store clerk on duty based on a facial image or an appearance feature amount of the extracted person and on-duty store clerk information including at least one of facial images and appearance feature amounts of store clerks on duty, and
a display control means for prohibiting to input a plurality of different sets of display data for different targets of customers into a display device when the determination means determined that the extracted person is a store clerk on duty; and the display control means being for estimating an attribute of the extracted person and for inputting a corresponding set of display data, which corresponds to the estimated attribute of the extracted person, into the display device when the determination means determined that the extracted person is not any store clerk on duty.

## Patentansprüche

1. Anzeigesteuervorrichtung, aufweisend:
eine Erfassungseinrichtung zum Erfassen eines von einer Kamera erzeugten Bildes;
eine Personenextraktionseinrichtung zum Extrahieren einer Person aus dem Bild;
eine Bestimmungseinrichtung zum Bestimmen, ob es sich bei der extrahierten Person um einen im Dienst befindlichen Ladenangestellten handelt, basierend auf einem Gesichtsbild oder einer Erscheinungsmerkmalsmenge der extrahierten Person und Informationen über im Dienst befindliche Ladenangestellte, die zumindest eines von Gesichtsbildern und Erscheinungsmerkmalsmengen von im Dienst befindlichen Ladenangestellten beinhalten; und
eine Anzeigesteuereinrichtung, um nicht eine Vielzahl von verschiedenen Sätzen von Anzeigedaten für verschiedene Kundenziele in eine Anzeigevorrichtung einzugeben, wenn die Bestimmungseinrichtung bestimmt, dass es sich bei der extrahierten Person um einen im Dienst befindlichen Ladenangestellten handelt; und wobei die Anzeigesteuereinrichtung zum Schätzen eines Attributs der extrahierten Person und zum Eingeben eines entsprechenden Satzes von Anzeigedaten, der dem geschätzten Attribut der extrahierten Person entspricht, in die Anzeigevorrichtung dient, wenn die Bestimmungseinrichtung bestimmt, dass es sich bei der extrahierten Person um keinen im Dienst befindlichen Ladenangestellten handelt.

2. Anzeigesteuervorrichtung nach Anspruch 1, wobei die Kamera in der Nähe der Anzeige oder in der Anzeige installiert ist.

3. Anzeigesteuervorrichtung nach Anspruch 1 oder 2,
wobei die Anzeigesteuereinrichtung erste Informationen in die Anzeige eingibt, wenn die Bestimmungseinrichtung bestimmt hat, dass es sich bei der extrahierten Person um einen im Dienst befindlichen Ladenangestellten handelt, wobei die ersten Informationen nicht mit den verschiedenen Kundenzielen assoziiert sind und wobei sich die ersten Informationen von der Vielzahl von verschiedenen Sätzen von Anzeigedaten für verschiedene Kundenziele unterscheiden.

4. Anzeigesteuersystem nach Anspruch 3, wobei die ersten Informationen Geschäftsempfehlungen sind.

5. Anzeigesteuersystem nach Anspruch 4, wobei die Anzeigesteuereinrichtung die auf der Anzeige anzuzeigende Geschäftsempfehlung auf der Grundlage von Informationen bestimmt, die die Geschäftsempfehlung für jede Zeitzone und eine aktuelle Zeit definieren.

6. Anzeigesteuersystem nach einem der Ansprüche 3 bis 5, wobei die zweiten Informationen Werbe- oder Kampagneninformationen sind.

7. Anzeigesteuersystem nach Anspruch 6, wobei die Anzeigesteuereinrichtung Attribute der Person auf der Grundlage des Bildes schätzt und die auf einer Anzeige anzuzeigenden Werbe- oder Kampagneninformationen auf der Grundlage der geschätzten Attribute bestimmt.

8. Anzeigesteuervorrichtung nach einem der Ansprüche 1 bis 7, ferner aufweisend:
eine Speichereinrichtung zum Speichern der Informationen über im Dienst befindliche Ladenangestellte, die in einem Laden installiert ist, in dem die Anzeige installiert ist,
wobei die Bestimmungseinrichtung die Bestimmung auf der Grundlage der in der Speichereinrichtung gespeicherten Informationen über im Dienst befindliche Ladenangestellte durchführt.

9. Anzeigesteuervorrichtung nach einem der Ansprüche 1 bis 8, wobei die Informationen über im Dienst befindliche Ladenangestellte zumindest eines von Gesichtsbildern und Erscheinungsmerkmalsmengen von im Dienst befindlichen und nicht in einer Pause befindlichen Ladenangestellten beinhalten.

10. Anzeigesteuerverfahren, das von einem Computer durchgeführt wird, wobei das Verfahren aufweist:
Erfassen eines von einer Kamera erzeugten Bildes;
Extrahieren einer Person aus dem Bild;
Bestimmen, ob es sich bei der extrahierten Person um einen im Dienst befindlichen Ladenangestellten handelt, basierend auf einem Gesichtsbild oder einer Erscheinungsmerkmalsmenge der extrahierten Person und Informationen über im Dienst befindliche Ladenangestellte, die zumindest eines von Gesichtsbildern und Erscheinungsmerkmalsmengen von im Dienst befindlichen Ladenangestellten beinhalten; und
Verhindern, dass eine Vielzahl von verschiedenen Sätzen von Anzeigedaten für verschiedene Kundenziele in eine Anzeigevorrichtung eingegeben wird, wenn bestimmt wird, dass es sich bei der extrahierten Person um einen im Dienst befindlichen Ladenangestellten handelt; und
Schätzen eines Attributs der extrahierten Person und Eingeben eines entsprechenden Satzes von Anzeigedaten, der dem geschätzten Attribut der extrahierten Person entspricht, in die Anzeigevorrichtung, wenn bestimmt wird, dass es sich bei der extrahierten Person um keinen im Dienst befindlichen Ladenangestellten handelt.

11. Programm, das einen Computer veranlasst, zu funktionieren als
eine Erfassungseinrichtung zum Erfassen eines von einer Kamera erzeugten Bildes,
eine Personenextraktionseinrichtung zum Extrahieren einer Person aus dem Bild,
eine Bestimmungseinrichtung zum Bestimmen, ob es sich bei der extrahierten Person um einen im Dienst befindlichen Ladenangestellten handelt, basierend auf einem Gesichtsbild oder einer Erscheinungsmerkmalsmenge der extrahierten Person und Informationen über im Dienst befindliche Ladenangestellte, die zumindest eines von Gesichtsbildern und Erscheinungsmerkmalsmengen von im Dienst befindlichen Ladenangestellten beinhalten, und
eine Anzeigesteuereinrichtung zum Verhindern, dass eine Vielzahl von verschiedenen Sätzen von Anzeigedaten für verschiedene Kundenziele in eine Anzeigevorrichtung eingegeben wird, wenn die Bestimmungseinrichtung bestimmt, dass es sich bei der extrahierten Person um einen im Dienst befindlichen Ladenangestellten handelt; und wobei die Anzeigesteuereinrichtung zum Schätzen eines Attributs der extrahierten Person und zum Eingeben eines entsprechenden Satzes von Anzeigedaten, der dem geschätzten Attribut der extrahierten Person entspricht, in die Anzeigevorrichtung dient, wenn die Bestimmungseinrichtung bestimmt hat, dass es sich bei der extrahierten Person um keinen im Dienst befindlichen Ladenangestellten handelt.

## Revendications

1. Dispositif de commande d'affichage comprenant :
un moyen d'acquisition pour acquérir une image générée par une caméra ;
un moyen d'extraction de personne pour extraire une personne de l'image ;
un moyen de détermination pour déterminer si la personne extraite est un employé de magasin de service sur la base d'une image faciale ou d'une quantité de caractéristiques d'apparence de la personne extraite et d'informations d'employé de magasin de service incluant au moins un élément parmi des images faciales et des quantités de caractéristiques d'apparence d'employés de magasin de service ; et
un moyen de commande d'affichage pour ne pas entrer une pluralité de différents ensembles de données d'affichage pour différentes cibles de clients dans un dispositif d'affichage lorsque le moyen de détermination a déterminé que la personne extraite était un employé de magasin de service ; et le moyen de commande d'affichage étant destiné à estimer un attribut de la personne extraite et à entrer un ensemble correspondant de données d'affichage, correspondant à l'attribut estimé de la personne extraite, dans le dispositif d'affichage lorsque le moyen de détermination a déterminé que la personne extraite n'était pas un employé de magasin de service.

2. Dispositif de commande d'affichage selon la revendication 1, dans lequel la caméra est installée à proximité de l'affichage ou dans l'affichage.

3. Dispositif de commande d'affichage selon la revendication 1 ou 2,
dans lequel le moyen de commande d'affichage entre des premières informations dans l'affichage lorsque le moyen de détermination a déterminé que la personne extraite était un employé de magasin de service, dans lequel les premières informations ne sont pas associées aux différentes cibles de clients et dans lequel les premières informations sont différentes de la pluralité de différents ensembles de données d'affichage pour différentes cibles de clients.

4. Système de commande d'affichage selon la revendication 3, dans lequel les premières informations sont des conseils commerciaux.

5. Système de commande d'affichage selon la revendication 4, dans lequel le moyen de commande d'affichage détermine les conseils commerciaux à afficher sur l'affichage sur la base d'informations qui définissent les conseils commerciaux pour chaque fuseau horaire et une heure actuelle.

6. Système de commande d'affichage selon l'une des revendications 3 à 5, dans lequel les secondes informations sont des informations de publicité ou de campagne.

7. Système de commande d'affichage selon la revendication 6, dans lequel le moyen de commande d'affichage estime des attributs de la personne sur la base de l'image et détermine les informations de publicité ou de campagne à afficher sur un affichage sur la base des attributs estimés.

8. Dispositif de commande d'affichage selon l'une des revendications 1 à 7, comprenant en outre :
un moyen de stockage pour stocker les informations d'employé de magasin de service, qui est installé dans un magasin dans lequel l'affichage est installé,
dans lequel les moyens de détermination réalisent la détermination sur la base des informations d'employé de magasin de service stockées dans le moyen de stockage.

9. Dispositif de commande d'affichage selon l'une des revendications 1 à 8, dans lequel les informations d'employé de magasin de service incluent au moins un élément parmi des images faciales et des quantités de caractéristiques d'apparence d'employés de magasin de service et non en pause.

10. Procédé de commande d'affichage réalisé par un ordinateur, le procédé comprenant :
l'acquisition d'une image générée par une caméra ;
l'extraction d'une personne de l'image ;
le fait de déterminer si la personne extraite est un employé de magasin de service sur la base d'une image faciale ou d'une quantité de caractéristiques d'apparence de la personne extraite et d'informations d'employé de magasin de service incluant au moins un élément parmi des images faciales et des quantités de caractéristiques d'apparence d'employés de magasin de service ; et
l'interdiction d'entrer une pluralité de différents ensembles de données d'affichage pour différentes cibles de clients dans un dispositif d'affichage lorsqu'il est déterminé que la personne extraite est un employé de magasin de service ; et
l'estimation d'un attribut de la personne extraite et l'entrée d'un ensemble correspondant de données d'affichage, correspondant à l'attribut estimé de la personne extraite, dans le dispositif d'affichage lorsqu'il est déterminé que la personne extraite n'est pas un employé de magasin de service.

11. Programme qui amène un ordinateur à fonctionner comme un moyen d'acquisition pour acquérir une image générée par une caméra,
un moyen d'extraction de personne pour extraire une personne de l'image,
un moyen de détermination pour déterminer si la personne extraite est un employé de magasin de service sur la base d'une image faciale ou d'une quantité de caractéristiques d'apparence de la personne extraite et d'informations d'employé de magasin de service incluant au moins un élément parmi des images faciales et des quantités de caractéristiques d'apparence d'employés de magasin de service, et
un moyen de commande d'affichage pour interdire l'entrée d'une pluralité de différents ensembles de données d'affichage pour différentes cibles de clients dans un dispositif d'affichage lorsque le moyen de détermination a déterminé que la personne extraite était un employé de magasin de service ; et le moyen de commande d'affichage étant destiné à estimer un attribut de la personne extraite et à entrer un ensemble correspondant de données d'affichage, correspondant à l'attribut estimé de la personne extraite, dans le dispositif d'affichage lorsque le moyen de détermination a déterminé que la personne extraite n'était pas un employé de magasin de service.
